(19) Europäisches Patentamt

European Patent Office

Office européen des brevets

(11) **EP 0 985 274 B1**

(12) **EUROPÄISCHE PATENTSCHRIFT**

(45) Veröffentlichungstag und Bekanntmachung des Hinweises auf die Patenterteilung:
**17.07.2002 Patentblatt 2002/29**

(21) Anmeldenummer: **98932019.7**

(22) Anmeldetag: **28.04.1998**

(51) Int Cl.⁷: **H04B 1/38**, H04Q 7/32

(86) Internationale Anmeldenummer:
**PCT/DE98/01175**

(87) Internationale Veröffentlichungsnummer:
**WO 98/54846 (03.12.1998 Gazette 1998/48)**

(54) **MOBILE STATION**

MOBILE STATION

STATION MOBILE

(84) Benannte Vertragsstaaten:
**DE FR GB IT**

(30) Priorität: **27.05.1997 DE 19722179**

(43) Veröffentlichungstag der Anmeldung:
**15.03.2000 Patentblatt 2000/11**

(73) Patentinhaber: **SIEMENS AKTIENGESELLSCHAFT
80333 München (DE)**

(72) Erfinder:
• **LEFEVRE, Pascal
  D-81379 München (DE)**
• **RUDOLPH, Karsten
  D-85051 Ingolstadt (DE)**

(56) Entgegenhaltungen:
**EP-A- 0 693 860**

**Beschreibung**

Die vorliegende Erfindung betrifft eine mobile Station gemäß dem Oberbegriff des Anspruches 1 zum Einsatz in Mobilfunksystemen. Insbesondere betrifft die vorliegende Erfindung Mobiltelefone, mit denen neben Sprachinformationen auch Textnachrichten übermittelt werden können.

Die mobile Kommunikation gehört zu den am schnellsten wachsenden Segmenten der Zukunfts- und Wachstumsbranche Telekommunikation. Derzeit sind verschiedene Mobilfunksysteme bzw. Kommunikationsstandards bekannt. Seit 1992 ist in Westeuropa das sogenannte GSM-Mobilfunksystem (Global System for Mobile Communication) in Betrieb, welches sich nachfolgend auch außerhalb Westeuropas in vielen Ländern durchgesetzt hat. Des weiteren ist das DCS-1800-Mobilfunksystem (Digital Cellular System) bekannt, welches mit dem GSM-Mobilfunksystem bis auf den Frequenzbereich nahezu identisch ist. Weitere bekannte Mobilfunksysteme bzw. Kommunikationsstandards sind der amerikanische D-AMPS-Mobilfunkstandard (Digital Advanced Mobile Phone System), der auch als IS-54 (Interim Standard 54) bezeichnet wird. Zudem ist in den U.S.A. das IS-95-Mobilfunksystem geläufig. In Japan ist der JDC-Mobilfunkstandard (Japanese Digital Cellular) bekannt, der auch als PDC-Mobilfunkstandard (Personal Digital Cellular) bezeichnet wird.

Die zuvor beschriebenen bekannten Mobilfunksysteme bzw. Kommunikationsstandards unterscheiden sich abgesehen von dem verwendeten Frequenzbereich in weiteren wesentlichen technischen Parametern, wie beispielsweise dem Kanalabstand, dem Multiplexverfahren, dem Modulationsverfahren oder der Anzahl der pro Trägerfrequenz übertragbaren Kanäle.

Die Mobilfunksysteme sind in der Regel zellular aufgebaut, d. h. die gesamte zu versorgende Fläche ist in kleinere Funkzonen, sogenannte Funkzellen, unterteilt, wobei jeder Funkzelle eine Basisstation zugeordnet ist, deren Empfangsbereich auf die entsprechende Funkzelle beschränkt ist. Innerhalb einer Funkzelle kommuniziert demnach ein mobiles Endgerät stets nur mit der für die Funkzelle verantwortlichen Basisstation. Bewegt sich ein mobiles Endgerät aus dem Versorgungsbereich ihrer Basisstation heraus, muß die Verbindung über eine andere Basisstation geführt werden, wobei dies durch einen automatischen Wechsel der Funkzone erfolgt, ohne daß die Qualität der laufenden Verbindung wesentlich störend beeinflußt wird. Dieser Vorgang wird als "Handover" bezeichnet.

Neben dem eigentlichen Telefondienst, d. h. der Übertragung von Sprachinformationen, bieten einige Mobilfunksysteme auch zusätzliche Dienstleistungen an, wie z. B. Kurznachrichtendienste, die Übermittlung von Teletext-Informationen oder die Übermittlung von Telefax-Informationen.

Die vorliegende Erfindung betrifft nun mobile Stationen, die zur Übermittlung der zuvor erwähnten Kurznachrichten in der Lage sind. Bei entsprechend ausgestatteten Mobiltelefonen kann demnach der Benutzer eine kurze Textnachricht verfassen und diese an einen gewünschten Empfänger versenden. Die Textnachricht kann in dem Mobiltelefon selbst oder auf einer Chipkarte, beispielsweise der SIM-Chipkarte (Subscriber Identity Modul), gespeichert werden.

Dieser Kurznachrichtendienst wird innerhalb des GSM-Mobilfunksystems als SMS (Short Message Service) bezeichnet. Bei SMS handelt es sich um einen neuen mobilfunkspezifischen Dienst, der mit dem GSM eingeführt wurde. Dabei können von einer mobilen Station Textnachrichten sowohl an einen einzelnen Empfänger als auch an mehrere Empfängerstationen gesendet werden, wie z. B. Verkehrsinformationen. Gemäß dem SMS-Standard können die zu übertragenden Textnachrichten maximal 160 alphanumerische Zeichen umfassen, wobei jedes Zeichen durch einen 7-Bit-ASCII-Code codiert und gepackt abgespeichert werden kann.

Das Eingeben der Textnachrichten erfolgt über die Tastatur des Mobiltelefons. Da eine Vielzahl von einzelnen alphanumerischen Zeichen eingegeben werden muß und zudem in der Regel jede Taste des Mobiltelefons zum Eingeben von Buchstaben und Ziffern mehrfach belegt ist, ist die Eingabe einer Textnachricht kompliziert, aufwendig und wenig benutzerfreundlich. Ist beispielsweise die Zahl "1" auf einer Taste an vierter Stelle nach den Buchstaben "ABC" vorgesehen, so muß vor der Eingabe der Zahl "1" die entsprechende Belegung durch mehrfache Betätigung dieser Taste ausgewählt werden. Insbesondere das Eingeben einer langen Zahl, z. B. einer Telefonnummer, in einer zu übermittelnden Textnachricht ist demnach für den Benutzer sehr beschwerlich.

Aus EP 0 693 860 ist bereits ein SMS-System bekannt, welches vorgefertigte SMS-Nachrichten enthält, welche durch benutzerdefinierte Eingaben erweiterbar sind. Ausführungsformen der in der Druckschrift beschriebenen Erfindung beschäftigen sich mit der Umsetzung dieser Nachrichten in andere Sprachen, insbesondere Sprachen mit sich von den lateinischen, Schriftzeichen unterscheidenden Schriftzeichen, beispielsweise griechischen oder kyrillischen Zeichen.

Der vorliegenden Erfindung liegt daher die Aufgabe zugrunde, eine mobile Station gemäß dem Oberbegriff des Anspruchs 1 derart auszugestalten, daß die Übermittlung von Textinformationen bzw. Textnachrichten mit der mobilen Station für einen Benutzer erleichtert wird.

Diese Aufgabe wird gemäß der vorliegenden Erfindung durch eine mobile Station mit den Merkmalen des Anspruchs 1 gelöst.

Die erfindungsgemäße mobile Station besitzt Speichermittel zum Speichern vorgegebener Textinformationen, welche mindestens ein nicht von dem Benutzer veränderbares Textfeld umfassen. Bei diesen vorgegebenen Textinformationen kann es sich um mehrere vorgegebene Textnachrichten handeln, aus denen ein Benutzer beliebig auswählen kann. Im einfachsten Fall muß somit der Benutzer lediglich eine der vorgegebenen Textnachrichten auswählen, ohne daß zusätzliche Texteingaben seitens des Benutzers erforderlich sind.

Die vorliegende Erfindung ist demnach nicht nur auf Mobiltelefone beschränkt, sondern kann auch allgemein auf mobile Stationen angewendet werden, die ausschließlich zur Übertragung von Textinformationen und/oder nur zum Senden (und nicht zusätzlich auch zum Empfangen) von Kommunikationsinformationen in der Lage sind.

Gemäß einem bevorzugten Ausführungsbeispiel der vorliegenden Erfindung handelt es sich jedoch bei den vorgegebenen Textinformationen um mehrere Textsätze bzw. Textnachrichten, wobei jede Textnachricht mehrere von einem Benutzer nicht veränderbare Textfelder sowie mehrere von einem Benutzer beliebig veränderbare Eingabefelder umfaßt. Mit Hilfe der Tastatur der mobilen Station kann demnach der Benutzer beliebig eine vorgegebene Textnachricht durch Einfügen von alphanumerischen Zeichen in ein veränderbares Eingabefeld der entsprechenden Textnachricht ergänzen.

Über die Anzeige bzw. das Display der mobilen Station kann der Benutzer kontinuierlich die Auswahl der Textnachrichten sowie das Einfügen der alphanumerischen Textzeichen überwachen.

Nach Auswählen einer vorgegebenen Textnachricht kann der Benutzer durch Betätigung entsprechender Tasten der Tastatur der mobilen Station zwischen den einzelnen beliebig veränderbaren Eingabefeldern wechseln, wobei vorzugsweise die aktuelle Einfügeposition auf der Anzeige durch einen blinkenden Cursor dargestellt wird.

Die in den Speichermitteln gespeicherten vorgegebenen Textinformationen umfassen demnach vordefinierte Textbausteine, die von einem Benutzer lediglich ergänzt werden müssen, so daß der Benutzer nurmehr wenig Text eingeben muß, so daß die Übertragung und die Eingabe von Textinformationen für den Benutzer deutlich erleichtert ist.

Ein beliebig veränderbares Eingabefeld einer ausgewählten Textnachricht kann leer oder bereits mit vorgegebenen Zeichen gefüllt sein, die von dem Benutzer übernommen oder überschrieben werden können. Ein Eingabefeld kann auch die Länge 0 besitzen, so daß in diesem Fall das Eingabefeld lediglich eine Einfügemarke darstellt, an der ein Benutzer einen beliebigen Text eingeben kann. Die Eingabefelder können eine variable Länge besitzen und sind daher beliebig vergrößerbar. Da jedoch beispielsweise bei dem GSM-Mobilfunksystem die Maximallänge einer zu übertragenden Textnachricht 160 Zeichen umfaßt, wird erfindungsgemäß vorgeschlagen, mit Hilfe einer entsprechenden Steuereinrichtung die augenblickliche Gesamtlänge des von dem Benutzer veränderten Textes zu überwachen und bei Überschreiten der Maximallänge zusätzlich eingegebene Textzeichen zu verwerfen oder eine Verlängerung der Textnachricht zu unterbinden. Allgemein wird bei Vergrößern eines Eingabefeldes der nachfolgende Text, d. h. nachfolgende unveränderbare Textfelder sowie nachfolgende veränderbare Eingabefelder, nach hinten, d. h. nach rechts geschoben.

Gemäß einem bevorzugten Ausführungsbeispiel der vorliegenden Erfindung sind den einzelnen beliebig veränderbaren Eingabefeldern bestimmte vorgegebene Feldtypen zugeordnet, so daß in jedes Eingabefeld nur dem Feldtyp entsprechende Zeichen in einem dem Feldtyp entsprechenden Format eingegeben werden können. So kann beispielsweise ein Eingabefeld nur die Eingabe von Ziffern und ein anderes nur die Eingabe von Buchstaben erlauben. Des weiteren ist im ersteren Fall möglich, daß ein Eingabefeld die Eingabe von Ziffern nur in einem Datumsformat oder in einem Uhrzeitformat erlaubt. Vorteilhafterweise besitzt die mobile Station eine Steuereinrichtung, die bei Positionieren des Cursors in einem Eingabefeld automatisch den diesem Eingabefeld zugeordneten Feldtyp erkennt und bei einer mehrfach belegten Tastatur der mobilen Station automatisch diejenige Belegung aktiviert, die dem Format des entsprechenden Feldtyps entspricht. Erlaubt beispielsweise ein Feldtyp eines Eingabefelds lediglich die Eingabe von Ziffern, so aktiviert die Steuereinrichtung automatisch diejenige Belegung der Tasten der Tastatur der mobilen Station, mit der die Eingabe von Ziffern möglich ist. Auf diese Weise wird zum einen automatisch die Eingabe von Buchstaben unterbunden und zum anderen wird die Eingabe der Ziffern erleichtert, da der Benutzer zur Eingabe einer Ziffer die entsprechende Taste nicht mehrfach betätigen muß.

Selbstverständlich hat der Benutzer auch die Möglichkeit, seinerseits neue Textinformationen bzw. Textnachrichten vorzugeben und abzuspeichern. Zusammen mit den vorgegebenen Textinformationen werden dabei Informationen zu jeder vorgegebenen Textnachricht abgespeichert, die die Anzahl der veränderbaren Eingabefelder, die Position der veränderbaren Eingabefelder in der vorgegebenen Textnachricht, die Länge der veränderbaren Eingabefelder und den Typ der einzelnen Eingabefelder der vorgegebenen Textnachricht definieren. Diese Informationen werden mit jeder vorgegebenen Textnachricht in Form eines "Headers" abgespeichert. Der Header umfaßt somit alle notwendigen Informationen über die veränderbaren Eingabefelder und stellt somit ein geeignetes Format zum Abspeichern der vorgegebenen Textnachrichten auf einem Datenspeicher mit geringem Speichervolumen dar, wobei größtmögliche Flexibilität gewahrt ist. Die Verwaltung der Eingabefelder in dem Header ermöglicht das einfache Auffinden der Eingabefelder.

Nach Auswahl einer vorgegebenen Textnachricht bzw, eines vorgegebenen Textsatzes wird die ausgewählte Textnachricht auf der Anzeige dargestellt, wobei vorzugsweise die von dem Benutzer veränderbaren Eingabefelder durch die Darstellung entsprechender Platzhalter markiert und hervorgehoben sind. Ebenso kann lediglich der Anfang und das Ende eines Eingabefeldes durch spezielle Zeichen markiert sein.

Auch wenn die vorliegende Erfindung nicht darauf beschränkt ist, wird die mobile Station der vorliegenden Erfindung doch vorteilhafterweise in Form eines Mobiltelefones angewendet, welches nicht nur Textinformationen senden, sondern auch empfangen kann, und zudem zur Übertragung von Sprachinformationen geeignet ist.

Die Unteransprüche beschreiben allgemein vorteilhafte Ausführungsformen der vorliegenden Erfindung.

Die Erfindung wird nachfolgend anhand eines bevorzugten Ausführungsbeispiels unter Bezugnahme auf die Zeichnung näher erläutert.

Fig. 1 zeigt ein vereinfachtes Blockschaltbild eines bevorzugten Ausführungsbeispiels einer erfindungsgemäßen mobilen Station, und

Fig. 2 und 3 zeigen Darstellungen zur Erläuterung der Auswahl und der Eingabe von zu übermittelnden Textinformationen bei dem in Fig. 1 gezeigten Ausführungsbeispiel.

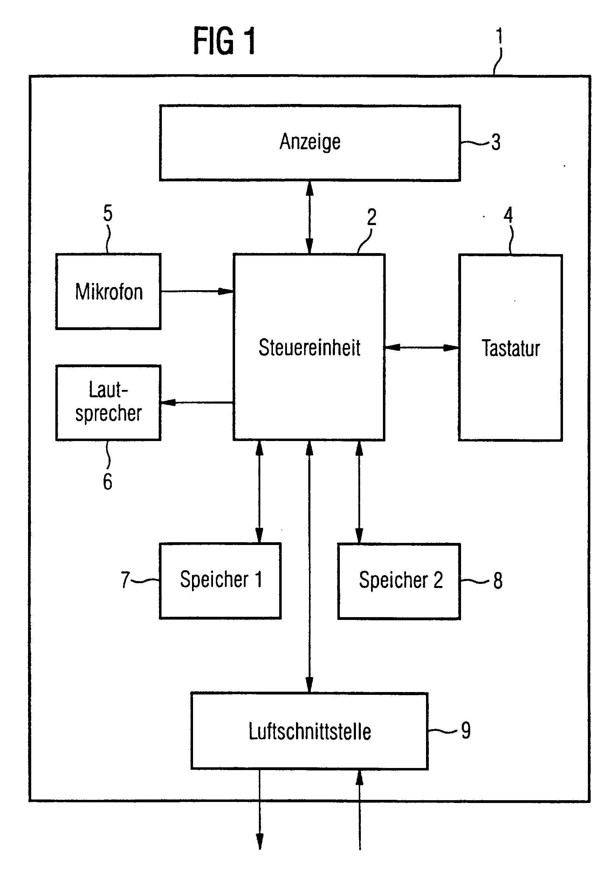

Das in Fig. 1 gezeigte bevorzugte Ausführungsbeispiel zeigt ein Mobiltelefon 1, welches allgemein Kommunikationsinformationen mit einer Basisstation gemäß einem bestimmten Kommunikationsstandard, z. B. GSM, austauscht. Abgesehen von der üblichen Übertragung von Sprachinformationen ist das in Fig. 1 gezeigte Mobiltelefon auch zur Übertragung von Textnachrichten, beispielsweise innerhalb des GSM-Mobilfunksystems gemäß dem SMS-Standard, geeignet. Die von dem in Fig. 1 gezeigten Mobiltelefon übertragenen sowie empfangenen Kommunikationsinformationen können somit sowohl Sprach- als auch Textinformationen umfassen. Das in Fig. 1 gezeigte Mobiltelefon 1 umfaßt einen ersten Speicher 7, in dem mehrere vorgegebene Textnachrichten bzw. Textsätze gespeichert sind, die jeweils mindestens ein von einem Benutzer nicht veränderbares Textfeld umfassen. Im einfachsten Fall sind sämtliche vorgegebenen Textnachrichten nicht veränderbar, so daß der Benutzer die zu übertragenden Textinformationen einfach durch Auswahl einer der vorgegebenen Textnachrichten festlegen kann.

Vorzugsweise weisen jedoch die in dem Speicher 7 abgelegten vorgegebenen Textnachrichten jeweils mehrere nicht veränderbare Textfelder sowie mehrere von dem Benutzer beliebig veränderbare Eingabefelder auf. Dem Benutzer sind somit durch jede vorgegebene Textnachricht mehrere Textbausteine vorgegeben, die von ihm lediglich ergänzt werden müssen, so daß von dem Benutzer nurmehr wenige Textzeichen von Hand eingegeben werden müssen.

Die Auswahl zwischen den vorgegebenen Textnachrichten erfolgt über die Tastatur 4 des Mobiltelefons. Ebenso erfolgt über diese Tastatur 4 das Eingeben von Textzeichen, wodurch die in den vorgegebenen Textnachrichten vorhandenen veränderbaren Eingabefelder überschrieben oder ausgefüllt werden können.

Nach Auswahl einer der vorgegebenen Textnachrichten wird diese auf der Anzeige bzw. dem Display 3 des Mobiltelefons 1 dargestellt. Die Anzeige 3 ist vorzugsweise in Form eines LCD ausgebildet. Durch Überwachen der Anzeige 3 kann der Benutzer ständig die augenblickliche Eingabeposition innerhalb der ausgewählten Textnachricht überwachen sowie die Eingabe von Textzeichen betrachten.

Nach Fertigstellen einer benutzerspezifischen Textnachricht, d. h. nach Ausfüllen der veränderbaren Eingabefelder einer ausgewählten vorgegebenen Textnachricht, kann der Benutzer die fertiggestellte Textnachricht in einem weiteren Speicher 8 ablegen, um diese später erneut abzurufen. Die Speicher 7 und 8 können auch durch ein und denselben Speicher gebildet sein. Des weiteren können die Speicher 7 und 8 austauschbar, z. B. in Form einer Chipkarte, vorgesehen sein, so daß verschiedene Benutzer das in Fig. 1 gezeigte Mobiltelefon 1 mit den jeweils gewünschten Textnachrichten betreiben können. Insbesondere können die Speicher 7 und/oder 8 auf der sogenannten SIM-Karte (Subscriber Identity Modul) eines Benutzers angeordnet sein. Diese SIM-Karte muß ein Benutzer in das Mobiltelefon 1 vor dessen Inbetriebnahme einschieben, wobei die SIM-Karte Authentikationsdaten beinhaltet, die den Benutzer identifizieren und bei Inbetriebnahme des Mobiltelefons 1 gelesen werden. Diese Authentikationsdaten sind erforderlich, damit beispielsweise Gebühren nicht dem falschen Teilnehmer zugeordnet werden.

Selbstverständlich hat der Benutzer auch die Möglichkeit, die in dem Speicher 7 abgelegten vorgegebenen Textnachrichten zu erweitern und beispielsweise zusätzliche Textnachrichten mit veränderbaren Eingabefeldern zu erstellen, die ebenfalls als vorgegebene Textnachrichten in dem Speicher 7 abgelegt werden.

Des weiteren hat der Benutzer auch die Möglichkeit, analog zu dem eingangs beschriebenen bekannten Stand der Technik keine der in dem Speicher 7 abgelegten vorgegebenen Textnachrichten auszuwählen, sondern beliebig einen vollständigen Text einzugeben und zu übertragen.

Da das in Fig. 1 gezeigte Ausführungsbeispiel ein Mobiltelefon 1 darstellt, weist die in Fig. 1 gezeigte mobile Station auch ein Mikrofon 5 zur Erfassung von Sprachinformation sowie einen Lautsprecher 6 zur Ausgabe von Sprachinformationen auf. Des weiteren ist eine zentrale Steuereinheit 2 vorgesehen, die die in dem Mobiltelefon angeordneten Bestandteile koordiniert und steuert und insbesondere die Informationsübertragung zwischen der Anzeige 3, der Tastatur 4, dem Mikrofon 5 und dem Lautsprecher 6 mit einer Mobilfunk-Luftschnittstelle 9 regelt. Nachdem der Benutzer eine gewünschte Textnachricht fertiggestellt hat, kann er durch Betätigen einer entsprechenden Taste der Tastatur 4 der Steuereinheit 2 mitteilen, daß diese Textnachricht an einen bestimmten Empfänger übertragen werden soll, der durch eine von dem Benutzer gewählte Zielrufnummer festgelegt ist. Die Steuereinheit 2 überträgt anschließend die der fertiggestellten Textnachricht entsprechenden Textinformationen bzw. Textdaten an die Luftschnittstelle 9 und aktiviert diese. Die Luftschnittstelle 9, die beispielsweise Kommunikationsdaten gemäß dem GSM-Mobilfunkstandard übertragen kann, codiert und moduliert die zu übertragenden Kommunikationsinformationen gemäß den technischen Eigenschaften des GSM-Mobilfunkstandards und überträgt anschließend die Kommunikationsinformationen, die gemäß der vorliegenden Erfindung auch Textinformationen enthalten, an eine Basisstation.

Die Basisstation ist schließlich für die Weiterübertragung der Kommunikationsinformationen an den gewünschten Empfänger verantwortlich. Die Luftschnittstelle 9 demoduliert und decodiert empfangene Kommunikationsinformationen entsprechend dem GSM-Mobilfunkstandard und führt die empfangenen Kommunikationsinformationen der Steuereinheit 2 zu, die - abhängig davon, ob es sich um Sprach- oder Textinformation handelt, die Kommunikationsinformationen über den Lautsprecher 6 ausgibt oder auf der Anzeige 3 darstellt. Auch empfangene Textinformationen können beispielsweise in dem Speicher 8 gespeichert werden und/oder über den Lautsprecher 6 akustische ausgegeben werden.

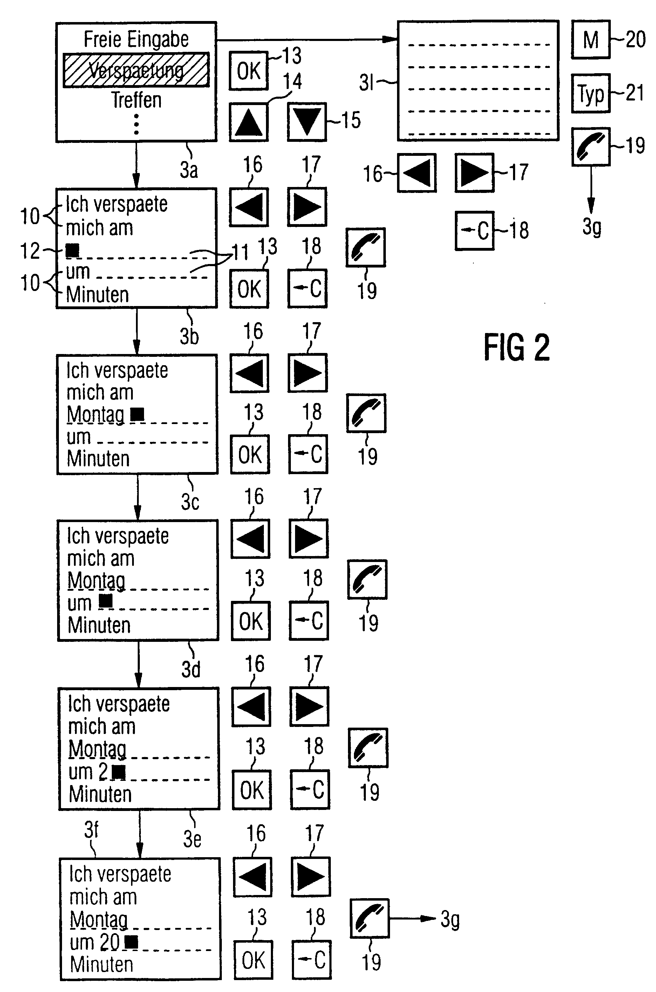

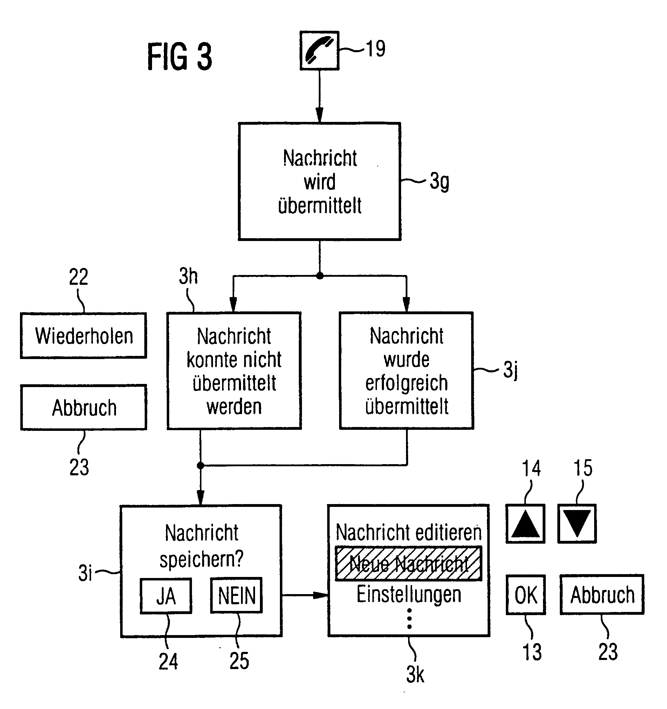

Der Betrieb des in Fig. 1 gezeigten bevorzugten Ausführungsbeispiels soll nachfolgend anhand Fig. 2 und 3 näher erläutert werden.

In Fig. 2 und 3 sind verschiedene Ansichten bzw. Darstellungsformen der in Fig. 1 gezeigten Anzeige 3 des Mobiltelefons 1 wiedergegeben, die sich im Laufe der Auswahl bzw. des Eingebens einer Textnachricht durch den Benutzer ergeben. Neben den einzelnen Darstellungen 3a - 3k der Anzeige 3 sind jeweils durch Darstellung entsprechender Tasten verschiedene Funktionen wiedergegeben, die bei dem jeweiligen Anzeigeinhalt 3a - 3k durchgeführt, d. h. ausgelöst werden können. Dabei kann für jede dieser Funktionen auf der Tastatur 4 des Mobiltelefons 1 eine entsprechende Taste vorgesehen sein. Wie anhand des Anzeigeninhalts 3i angedeutet ist, kann es sich jedoch auch um Funktionsfelder handeln, die zusammen mit einem darzustellenden Text auf der Anzeige 3 angezeigt werden, wobei zwischen den einzelnen Funktionsfeldern mit Hilfe einer Taste der Tastatur 4 des Mobiltelefons gewechselt und die entsprechende Funktion ausgewählt werden kann.

In Fig. 2 ist mit dem Anzeigeninhalt 3a die Anzeige 3 für den Fall dargestellt, daß ein Benutzer mit Hilfe der Tastatur 4 der Steuereinheit 2 mitgeteilt hat, daß er das Erstellen bzw. Absenden einer neuen Textnachricht wünscht. In diesem Fall werden auf der Anzeige 3 mehrere Auswahlmöglichkeiten dargestellt, wobei eine der Auswahlmöglichkeiten - wie nachfolgend noch näher beschrieben werden wird - die Eingabe eines beliebigen Textes ohne vorgegebene Textfelder ermöglicht (Option "freie Eingabe"). Die weiteren dargestellten Optionen sind jeweils Kurzbezeichnungen für verschiedene in dem Speicher 7 vorgegebene Textinformationen bzw. Textnachrichten, die jeweils aus mehreren vorgegebenen und nicht veränderbaren Textfeldern sowie mehreren benutzerspezifisch beliebig veränderbaren Eingabefeldern bestehen. Will der Benutzer dem Empfänger beispielsweise mitteilen, daß er sich verspätet, so wählt er - wie in Fig. 2 dargestellt ist - die vorgegebene Textnachricht mit der Bezeichnung "Verspätung" aus. Will der Benutzer hingegen ein Treffen arrangieren, so wählt er die vorgegebene Textnachricht mit der Bezeichnung "Treffen" aus. Die Auswahl erfolgt über die Tasten bzw. Funktionsfelder 14 und 15, wobei die Auswahl mit Hilfe der Taste 3 bestätigt werden kann. Die jeweils gegenwärtig ausgewählte Option wird durch einen Balken hinterlegt dargestellt.

Nachfolgend wird davon ausgegangen, daß der Benutzer auf dem Anzeigeninhalt 3a die Option "Verspätung" ausgewählt hat, so daß die in Fig. 1 dargestellte Steuereinheit 2 aus dem Speicher 7 die entsprechende vorgegebene Textnachricht lädt und auf der Anzeige 3 darstellt, was durch den Anzeigeninhalt 3b angedeutet wird.

Die geladene und auf der Anzeige 3 dargestellte vorgegebene Textnachricht umfaßt mehrere Textfelder 10, die von dem Benutzer nicht verändert werden können. Des weiteren sind mehrere Eingabefelder 11 vorgesehen, die von dem Benutzer beliebig verändert und ausgefüllt bzw. überschrieben werden können. Der Umfang der vorgegebenen Textfelder 10 ist durch das entsprechende Speichermedium 7 beschränkt und kann beispielsweise bei dem GSM-Mobilfunkstandard auf maximal 64 Zeichen festgelegt sein. Ebenfalls ist die nach dem benutzerspezifischen Ausfüllen der vorgegebenen Textnachricht zulässige Gesamttextlänge durch das Speichermedium sowie das zugrundeliegende Mobilfunksystem beschränkt. Bei dem GSM-Mobilfunkstandard kann die Textnachricht gemäß dem SMS-Standard maximal 160 Zeichen umfassen.

Ausgehend von dem in Fig. 2 gezeigten Anzeigeninhalt 3b kann der Benutzer nun beliebig die vorgegebenen Eingabefelder 11 ausfüllen bzw. überschreiben. Wie in Fig. 2 dargestellt ist, werden gemäß dem bevorzugten Ausführungsbeispiel die Eingabefelder durch "_" angedeutet. Ebenso ist jedoch auch denkbar, daß lediglich der Anfang und das Ende eines jeden Eingabefeldes 11 durch ein bestimmtes Sonderzeichen angedeutet werden. Die augenblickliche Eingabeposition wird dem Benutzer durch einen blinkenden Cursor 12 angedeutet. Der Benutzer kann sich nunmehr innerhalb der Eingabefelder mit Hilfe der Tasten bzw. Funktionsfelder 16 bis 17 frei bewegen. Befindet sich der Cursor 12 am Ende eines Eingabefeldes 11 und wählt der Benutzer die Funktion 17 aus, so springt der Cursor 12 automatisch in das nächstfolgende Eingabefeld 11 um. Mit Hilfe der sogenannten "Backspace-Funktion" 18 kann der Benutzer jeweils das links von dem Cursor 12 liegende Zeichen eines Eingabefeldes 11 löschen.

Alternativ zu der in Fig. 2 dargestellten Ausführungsform kann auch für jedes beliebig veränderbare Eingabefeld 11 bereits vollständig oder teilweise ein entsprechender Text vorgegeben sein. So kann beispielsweise für das in Fig. 2 dargestellte erste Eingabefeld 11 bereits ein Vorschlag für einen Wochentag vorgegeben sein, den der Benutzer entweder übernehmen oder aber beliebig überschreiben kann.

Des weiteren können die Textfelder 11 eine variable Länge besitzen und daher beliebig vergrößert werden. Erreicht beispielsweise der Cursor 12 das Ende eines Eingabefeldes 11 und werden über die Tastatur 4 weitere Textzeichen eingegeben, so verlängert sich das Eingabefeld 11 automatisch und der nachfolgende Text, d. h. die nachfolgenden Text- und Eingabefelder, werden nach hinten verschoben. Da - wie bereits zuvor beschrieben worden ist - abhängig von dem Speichermedium, d. h. den Speichern 7 und 8 des in Fig. 1 gezeigten Mobiltelefones 1, sowie dem zugrundeliegenden Mobilfunksystem die Gesamtlänge einer zu übertragenden Textnachricht beschränkt ist, überwacht die in Fig. 1 gezeigte Steuereinheit 2 kontinuierlich die augenblickliche Gesamtlänge der eingegebenen Textnachricht. Übersteigt die Gesamtlänge der auf der Anzeige 3 dargestellten Textnachricht eine bestimmte vorgegebene Maximallänge, bei dem GSM-Mobilfunksystem 160 Zeichen, so läßt die Steuereinheit 2 keine Verlängerung des entsprechenden Eingabefeldes 11 mehr zu und überschreibt dementsprechend ständig das letzte Zeichen des entsprechenden Eingabefeldes bzw. verwirft zusätzlich eingegebene Textzeichen.

Ein Eingabefeld 11 der vorgegebenen Textnachricht kann auch die Länge 0 besitzen. In diesem Fall stellt das entsprechende Eingabefeld lediglich eine Einfügeposition, d. h. eine bestimmte Stelle in der vorgegebenen Textnachricht, dar, an der ein Benutzer beliebige Zeichen einfügen kann, solange die Gesamtlänge der sich daraus ergebenden Textnachricht nicht die vorgegebene Maximallänge überschreitet. Die anderen Eingabefelder 11, die eine Länge größer als 0 besitzen, definieren hingegen Stellen innerhalb der vorgegebenen Textnachricht, an denen das entsprechend vorgegebene Eingabefeld zunächst überschrieben, d. h. ausgefüllt werden muß, bevor eine Erweiterung, d. h. Verlängerung des entsprechenden Eingabefeldes erfolgen kann.

Vorteilhafterweise ist jedem Eingabefeld 11, welches benutzerspezifisch verändert und erweitert werden kann, ein bestimmter Eingabefeldtyp zugeordnet. So kann beispielsweise zwischen einem Buchstaben-, einem Ziffern-, einem Datums- oder einem Uhrzeiteingabefeld unterschieden werden. Abhängig von dem einem Eingabefeld 11 zugeordneten Eingabefeldtyp überwacht die Steuereinheit 2 das Ausfüllen des entsprechenden Eingabefeldes. Ist einem Eingabefeld 11 beispielsweise der Typ "Buchstabeneingabefeld" zugeordnet, so läßt die Steuereinheit 2 ausschließlich die Eingabe von Buchstaben über die Tastatur 4 zu. Bei den beiden in Fig. 2 dargestellten Eingabefeldern handelt es sich beispielsweise bei dem ersten Eingabefeld um ein Buchstabeneingabefeld und bei dem zweiten Eingabefeld um ein Zifferneingabefeld. Ist einem Eingabefeld der Typ "Datumseingabefeld" zugeordnet, so können nur Ziffern eingegeben werden, die zudem ein bestimmtes vorgegebenes Datumsformat erfüllen usw.

Die Tasten eines Mobiltelefons sind in der Regel mehrfach belegt, wobei einer Taste insbesondere mehrere Buchstaben und eine Ziffer zugeordnet sind. So kann beispielsweise einer Taste die Ziffer "9" sowie die Buchstaben "W,X,Y,Z" zugeordnet sein. Um demnach mit dieser Taste den Buchstaben "Z" einzugeben, muß die entsprechende Taste fünfmal betätigt werden, während für die Eingabe einer "9" eine einmalige Betätigung genügt. Ebenso kann jedoch der Fall auftreten, daß für die Auswahl einer Ziffer die entsprechende Taste mehrfach betätigt werden muß. Ebenso kann eine Auswahltaste vorgesehen sein, mit deren Hilfe eine bestimmte Belegung der Tasten des Mobiltelefons ausgewählt und aktiviert werden kann. Da gemäß dem bevorzugten Ausführungsbeispiel jedem Eingabefeld ein bestimmter Eingabefeldtyp zugeordnet ist, wird zudem vorgeschlagen, daß die Steuereinheit 2 abhängig von der augenblicklichen Position des Cursors 12 das augenblicklich ausgefüllte Eingabefeld 11 überwacht und automatisch den Typ des entsprechenden Eingabefeldes 11 ermittelt. Die Ermittlung des Typs der verschiedenen Eingabefelder erfolgt anhand von Informationsdaten, die zusammen mit den vorgegebenen Textinformationen in dem Speicher 7 abgelegt sind und insbesondere die einzelnen Eingabefelder jeder vorgegebenen Textnachricht des Speichers 7 näher definieren. Diese Informationen werden nachfolgend noch näher beschrieben. Nachdem die Steuereinheit 2 den Typ des augenblicklich ausgefüllten Eingabefeldes 11 ermittelt hat, wird automatisch die dem Eingabefeldtyp entsprechende Belegung der Taste des Mobiltelefons aktiviert und die anderen Belegungen der Tasten deaktiviert. Handelt es sich um eine Zifferneingabefeld, so wird einerseits automatisch die Eingabe von Buchstaben unterbunden, und andererseits die Eingabe von Ziffern erleichtert, da zur Eingabe einer bestimmten Ziffer die entsprechende Taste lediglich einmal betätigt werden muß, selbst wenn normalerweise die gewünschte Ziffer auf der entsprechenden Taste erst nach drei- oder viermaliger Betätigung der Taste ausgewählt werden würde.

Gemäß Fig. 2 sind sämtliche Eingabefelder 11 durch "_" angedeutet. Alternativ können die verschiedenen Typen von Eingabefeldern durch unterschiedliche Platzhalter angedeutet werden, wobei dann jedoch für jeden Eingabefeldtyp ein unterschiedlicher Platzhalter, d. h. gegebenenfalls ein zusätzliches Sonderzeichen, erforderlich ist.

Bei dem in Fig. 2 gezeigten Ausführungsbeispiel hat der Benutzer - wie durch den Anzeigeninhalt 3c angedeutet ist - in das erste Eingabefeld den gewünschten Wochentag "Montag" eingegeben. Durch Betätigung der Funktion "OK" (Funktionstaste 13) springt der Cursor 12 automatisch in das nächste Eingabefeld um, wobei an dieser Stelle gemäß Fig. 2 die Eingabe einer gewünschten Minutenanzahl möglich ist. Auch an dieser Stelle kann - wie bereits zuvor beschrieben worden ist - wiederum ein Standardwert vorgegeben sein. Nachdem der Cursor in das Eingabefeld für die Minutenanzahl umgesprungen ist (Anzeigeninhalt 3d), kann der Benutzer das entsprechende Eingabefeld wie gewünscht ausfüllen (Anzeigeninhalte 3e und 3f). Nach dem Eingeben der gewünschten Minutenanzahl (Anzeigeninhalt 3f) ist die benutzerspezifische gewünschte Textnachricht im Prinzip fertiggestellt. Der Benutzer kann nunmehr durch Betätigen bzw. Auswählen der Funktion 19 die somit fertiggestellte Textnachricht an einen gewünschten Empfänger übermitteln, d. h. absenden. Für das Absenden der Textnachricht ist es jedoch nicht erforderlich, daß sämtliche vorgegebenen Eingabefelder ausgefüllt werden. Vielmehr kann der Benutzer während des Eingabevorgangs an jeder Stelle nach Aufrufen einer vorgegebenen Textnachricht durch Betätigen der Funktion 19 die soweit erstellte Textnachricht absenden. Die Funktion 19 steht somit für jeden Anzeigeninhalt 3b bis 3f zur Verfügung.

Nach Betätigen der Funktionstaste bzw. nach Auswahl des Funktionsfeldes 19 schaltet - wie durch Fig. 3 dargestellt ist - die Anzeige 3 auf den in Fig. 3 dargestellten Anzeigeinhalt 3g um und teilt dem Benutzer mit, daß die von ihm erstellte Nachricht nunmehr übermittelt wird.

Konnte die Nachricht erfolgreich übermittelt werden, wird dies dem Benutzer mitgeteilt (Anzeigeninhalt 3j) und der Benutzer wird nachfolgend gefragt, ob er die von ihm erstellte Textnachricht speichern will (Anzeigeninhalt 3i). Wie bereits zuvor beschrieben worden ist, können die in Fig. 2 und 3 dargestellten Funktionen durch Betätigen von entsprechend zugeordneten Tasten der Mobiltelefon-Tastatur 4 ausgewählt werden. Da aufgrund der großen Anzahl von unterschiedlichen Funktionen jedoch eine entsprechend große Anzahl von einzelnen Tasten bzw. eine entsprechende Mehrfachbelegung der vorhandenen Tasten erforderlich wäre, werden die einzelnen Funktionen vorzugsweise in Form von Funktionsfeldern zusammen mit dem darzustellenden Text auf der Anzeige 3 dargestellt. Dies ist beispielsweise mit Hilfe der Auswahlfelder 24 und 25 anhand der Anzeigeneinheit 3i angedeutet. Durch Betätigen der Funktion 24 wird die erstellte Textnachricht abgespeichert und auf die Anzeige 3k umgeschaltet. Nach Betätigen der Funktion 25 wird unmittelbar der Anzeigeninhalt 3k dargestellt.

Anhand des Anzeigeninhalts 3k kann der Benutzer nunmehr die gegenwärtig erstellte Textnachricht editieren, wobei in diesem Fall beispielsweise der in Fig. 2 dargestellte Anzeigeninhalt 3f dargestellt wird. Ebenso hat der Benutzer die Möglichkeit, eine neue Nachricht zu erstellen, wobei der in Fig. 2 gezeigte Anzeigeninhalt 3b aufgerufen wird. Des weiteren kann über die Option "Einstellungen" der SMS-Betrieb konfiguriert und entsprechende Parameter eingestellt werden. Analog zu dem Anzeigeninhalt 3a von Fig. 2 erfolgt auch in diesem Fall die Auswahl der gewünschten Option mit Hilfe der Tasten bzw. Funktionsfelder 14 und 15, wobei eine ausgewählte Funktion durch die Funktion 13 bestätigt und aktiviert wird. Über die Taste bzw. das Funktionsfeld 23 kann der Benutzer das durch die Anzeige 3k dargestellte Menü abbrechen, wobei dann die Standardanzeige des Mobiltelefons aufgerufen wird.

Konnte nach dem Anzeigeninhalt 3g die zunächst von dem Benutzer erstellte Nachricht nicht erfolgreich übermittelt werden, weil beispielsweise ein Fehler in der Übermittlung aufgetreten ist oder der Empfänger nicht erreichbar war, wird der Anzeigeninhalt 3h dargestellt und der Benutzer entsprechend informiert. Der Benutzer hat nunmehr die Möglichkeit, die Übertragung der von ihm erstellten Textnachricht zu wiederholen (Funktion 22) oder durch Betätigung der Funktion 23 die Übertragung abzubrechen, wobei anschließend zu dem Anzeigeninhalt 3i übergegangen wird, so daß der Benutzer vor Beenden des SMS-Betriebs noch die Möglichkeit hat, die von ihm erstellte Textnachricht abzuspeichern.

Benutzerspezifische Textnachrichten werden allgemein in dem in Fig. 1 dargestellten zweiten Speicher 8 abgelegt. Dieser Speicher 8 kann getrennt von dem Speicher 7, in dem die vorgegebenen Textnachrichten abgelegt sind, vorgesehen sein. Alternativ können jedoch auch die beiden Speicher 7 und 8 durch einen einzigen Speicher realisiert sein.

Abschließend soll anhand des Anzeigeninhaltes 31 von Fig. 2 auch der Fall erläutert werden, daß der Benutzer bei dem Menü 3a die erste Option "Freie Eingabe" gewählt hat. In diesem Fall hat der Benutzer die Möglichkeit, ohne Vorgabe bestimmter nichtveränderbarer Textfelder oder beliebig veränderbarer Eingabefelder eine Textnachricht vollständig frei zu erstellen. Die Funktion der Tasten bzw. Funktionsfelder 16-19 entspricht den hinsichtlich der Anzeigeninhalte 3b bis 3f dargestellten und beschriebenen Tasten bzw. Funktionsfeldern. Insbesondere kann der Benutzer durch Auswahl der Funktion 19 die von ihm erstellte Textnachricht an einen bestimmten Empfänger absenden, wobei in diesem Fall mit den in Fig. 3 dargestellten Anzeigen 3g - 3k fortgefahren wird.

Der Benutzer kann jedoch auch auf diese Weise neue bzw. zusätzliche Textnachrichten erstellen, die später als vorgegebene Textnachrichten verwendet werden sollen und daher in dem in Fig. 1 gezeigten Speicher 7 abzulegen sind. Zu diesem Zweck kann der Benutzer nach Auswahl der Option "Freie Eingabe" nach Darstellung des Menüs 3a den Text eingeben, der die anhand des Anzeigeninhalts 3b dargestellten Textfelder 10 bildet. Dazwischen kann der Benutzer die als veränderbare Eingabefelder 11 dienenden Felder definieren und insbesondere durch Betätigung der Taste 21 bzw. durch Auswahl der entsprechenden Funktion für jedes von ihm festgelegte Eingabefeld einen zugeordneten Eingabefeldtyp auswählen. Nachdem auf diese Weise eine neue Vorlage-Textnachricht erstellt worden ist, kann mit Hilfe der Funktion 20 die Vorlage als neue vorgegebene Textnachricht in dem Speicher 7 abgelegt werden und erscheint demnach bei einer späteren Übertragung bzw. Erstellung einer benutzerspezifischen Textnachricht in dem Auswahlmenü 3a.

In dem Speicher 7 werden nicht nur die Textinformationen der einzelnen vorgegebenen Textnachrichten bzw. Textvorlagen gespeichert. Um ein größtmögliches Maß an Flexibilität zu erhalten, werden zusammen mit den einzelnen Textinformationen einer vorgegebenen Textnachricht auch Informationen abgespeichert, welche die Anzahl der Eingabefelder, die Position und die Feldlänge der einzelnen Eingabefelder sowie den Typ der einzelnen Eingabefelder definieren. Insbesondere werden diese Informationen für jede vorgegebene Textnachricht in Form eines "Headers" abgespeichert, dem die eigentlichen Textinformationen, d. h. die in den nichtveränderbaren Textfeldern der entsprechenden vorgegebenen Textnachricht festgelegten Textzeichen, folgen. Durch das Verwalten der Eingabefelder jeder vorgegebenen Textnachricht in einem Header kann die Steuereinheit 2 schnell und einfach nach Auswahl der entsprechenden Textnachricht diese auf der Anzeige 3 mit einer korrekten Position und Länge der festgelegten Eingabefelder anzeigen.

Der sog. Header kann beispielsweise folgendes Format besitzen:

$$\text{Header} = \text{number\_of\_fields fields}$$

$$\text{number\_of\_fields} = \text{short\_byte}$$

$$\text{fields} = \{\text{startpos length}\}$$

$$\text{length} = \text{field\_type number\_of\_chars}$$

$$\text{startpos} = \text{short\_byte}$$

$$\text{digit} = '0'|'1'|...|'9'$$

$$\text{short\_byte} = \text{digit\{digit\}}$$

$$\text{number\_of\_chars} = '0'|'1'|...|'16'$$

$$\text{field\_type} = \text{typ0}|\text{typ1}|...|\text{typ7}$$

Die erste Zeile dieses Formats besagt, daß der Header aus der Anzahl der Eingabefelder ("number_of_fields") sowie den notwendigen Informationen der Felder ("fields")besteht. Diese notwendigen Feldinformationen umfassen die Startposition ("startpos") des Eingabefelds und die entsprechende Eingabefeldlänge ("length") (vgl. 3. Zeile des Formats). Die Anzahl der Eingabefelder ("number_of_fields") sowie die Startposition der Eingabefelder ("startpos") können jeweils durch eine Zahl mit dem sog. Short-Byte-Datenformat beschrieben werden (vgl. 2. und 5. Zeile in Verbindung mit 6. und 7. Zeile des obigen Formats). Die Eingabefeldlänge ("length") ist vom Typ des Eingabefelds ("field_type") abhängig und wird durch eine bestimmte Anzahl an Zeichen ("number_of_chars") definiert (vgl. 4. Zeile des Headerformats). Die pro Eingabefeld maximal mögliche Anzahl an Zeichen wird durch die vorletzte Headerformat-Zeile auf 16 beschränkt. Die letzte Zeile des Headerformats legt schließlich fest, daß hinsichtlich des Eingabefeldtyps ("field_type") zwischen insgesamt acht unterschiedlichen Typen ("typ0" ... "typ7") unterschieden werden kann.

Eingabefelder mit einer Länge m>0 beinhalten die an der angegebenen Startposition im Text folgenden m Zeichen. Dadurch erhält das Formular bereits Standardwerte, die übernommen oder geändert werden können. Eingabefelder mit einer Länge m=0 beinhalten keinen Text, sondern kennzeichnen lediglich eine Position im Text, an der weiterer Text eingefügt werden kann.

Das oben beschriebene Format stellt ein hinsichtlich des benötigten Speicherbedarfs optimiertes und zugleich besonders flexibles Konzept für das Abspeichern und Verwalten der Textinformationen bzw. Textnachrichten dar. Das Verwalten der Felder im sog. Header ermöglicht das einfache und schnelle Auffinden der Eingabefelder.

**Patentansprüche**

1.   Mobile Station zum Übertragen von Kommunikationsinformationen an eine Basisstation, wobei die Kommunikationsinformationen Textinformationen umfassen,
mit Eingabemitteln (4) zum Eingeben der Textinformationen, und
mit einer Sendeeinheit (9) zum Übertragen der Kommunikationsinformationen,
mit Speichermittel (7) zum Speichern vorgegebener Textinformationen, welche mindestens ein nicht veränderbares Textfeld (10) umfassen,
**gekennzeichnet dadurch, daß**

die gespeicherten vorgegebenen Textinformationen textnachrichtenabhängig Informationen über die Anzahl der veränderbaren Eingabefelder (11), die Position der veränderbaren Eingabefelder (11) in der entsprechenden Textnachricht und/oder die Länge der veränderbaren Eingabefelder (11) enthalten.

2.   Mobile Station nach Anspruch 1,
**dadurch gekennzeichnet,**
**daß** die in den Speichermitteln (7) gespeicherten vorgegebenen Textinformationen mehrere vorgegebene Textnachrichten umfassen, welche jeweils aus einem nicht veränderbaren Textfeld (10) sowie mindestens einem durch einen Benutzer beliebig veränderbaren Eingabefeld (11) bestehen.

3.   Mobile Station nach Anspruch 2,
**dadurch gekennzeichnet,**
**daß** die Eingabemittel (4) zum Auswählen einer der Textnachrichten sowie zum Verändern bzw. Ausfüllen eines veränderbaren Eingabefeldes (11) der ausgewählten Textnachricht vorgesehen sind.

4.   Mobile Station nach Anspruch 3,
**dadurch gekennzeichnet,**
**daß** über die Eingabemittel (4) die Sendeeinheit (9) aktivierbar ist, wobei die von der Sendeeinheit (9) übertragenen Textinformationen die ausgewählte vorgegebene Textnachricht mit dem mindestens einen unveränderbaren Textfeld (10) sowie dem mindestens einen veränderbaren Eingabefeld (11) sowie gegebenenfalls über die Eingabemittel (4) in das mindestens eine veränderbare Eingabefeld (11) eingegebene Textzeichen umfassen.

5.   Mobile Station nach Anspruch 3 oder 4,
**gekennzeichnet durch**
eine Anzeigeneinrichtung (3), welche die auswählbaren vorgegebenen Textnachrichten darstellt und das mindestens eine nicht veränderbare Textfeld (10) sowie das mindestens eine beliebig veränderbare Eingabefeld (11) einer Textnachricht nach deren Auswahl anzeigt.

6.   Mobile Station nach Anspruch 5,
**dadurch gekennzeichnet,**
**daß** die Anzeigeneinrichtung (3) ein beliebig veränderbares Eingabefeld (11) einer ausgewählten vorgegebenen Textnachricht optisch markiert darstellt.

7.   Mobile Station nach einem der Ansprüche 3 bis 6,
**dadurch gekennzeichnet,**
**daß** die Eingabemittel (4) einen Wechsel zwischen den beliebig veränderbaren Eingabefeldern (11) einer ausgewählten vorgegebenen Textnachricht ermöglichen, falls die ausgewählte vorgegebene Textnachricht mehrere veränderbare Eingabefelder (11) umfaßt, um jedes dieser veränderbaren Eingabefelder (11) zu verändern.

8.   Mobile Station nach Anspruch 5 oder 6 und Anspruch 7,
**dadurch gekennzeichnet,**
**daß** die Anzeigeneinrichtung (3) die augenblickliche Eingabeposition in einem beliebig veränderbaren Eingabefeld (11) einer ausgewählten vorgegebenen Textnachricht anzeigt, an der ein Textzeichen mit Hilfe der Eingabemittel (4) eingegeben werden kann.

9.   Mobile Station nach einem der vorhergehenden Ansprüche,
**gekennzeichnet durch**
Speichermittel (8) zum Speichern von benutzerspezifisch erstellten Textinformationen, welche auf den vorgegebenen Textinformationen basieren.

10.   Mobile Station nach Anspruch 9,
**dadurch gekennzeichnet,**
**daß** die Speichermittel (7) zum Speichern der vorgegebenen Textinformationen auch die benutzerspezifisch erstellten Textinformationen speichern.

11.   Mobile Station nach Anspruch 9 oder 10,
**dadurch gekennzeichnet,**
**daß** die Speichermittel (7) zum Speichern der vorgegebenen Textinformationen und/oder die Speichermittel (8) zum Speichern der benutzerspezifisch erstellten Textinformationen austauschbar sind.

12.   Mobile Station nach einem der Ansprüche 2 bis 11,
**dadurch gekennzeichnet,**
**daß** jedem veränderbaren Eingabefeld (11) einer vorgegebenen Textnachricht ein bestimmter Eingabefeldtyp zugeordnet ist.

13.   Mobile Station nach Anspruch 12,
**dadurch gekennzeichnet,**
**daß** als Eingabefeldtypen ein Buchstabeneingabefeld, welches nur die Eingabe von Buchstaben erlaubt, ein Zifferneingabefeld, welches nur die Eingabe von Ziffern erlaubt, ein Datumsfeld, welches nur die Eingabe eines Datums erlaubt, und/oder ein Uhrzeitfeld, welches nur die Eingabe einer Uhrzeit erlaubt, vorgesehen sind/ist.

14.   Mobile Station nach Anspruch 12 oder 13,
**dadurch gekennzeichnet,**
**daß** die Eingabemittel (4) eine Tastatur umfassen, deren Tasten mehrfach belegt sind, und
**daß** eine Steuereinrichtung (2) vorgesehen ist, welche automatisch den Eingabefeldtyp eines zu verändernden Eingabefeldes (11) erkennt und diejenige Belegung der Tastatur blockiert, welche nicht dem erkannten Eingabefeldtyp entspricht.

15. Mobile Station nach einem der Ansprüche 12 bis 14,
    **dadurch gekennzeichnet,**
    **daß** die gespeicherten vorgegebenen Textinformationen textnachrichtenabhängig Informationen über die Eingabefeldtypen der beliebig veränderbaren Eingabefelder (11) der einzelnen Textnachrichten enthalten.

16. Mobile Station nach einem der Ansprüche 11 bis 15,
    **dadurch gekennzeichnet,**
    **daß** in den gespeicherten vorgegebenen Textinformationen der eigentliche Text der vorgegebenen Textnachrichten nach den textnachrichtenabhängigen Informationen angeordnet ist.

17. Mobile Station nach einem der vorhergehenden Ansprüche,
    **dadurch gekennzeichnet,**
    **daß** die Eingabemittel (4) zum benutzerspezifischen Erstellen der vorgegebenen Textinformationen vorgesehen sind.

18. Mobile Station nach einem der vorhergehenden Ansprüche,
    **dadurch gekennzeichnet,**
    **daß** das mindestens eine beliebig veränderbare Eingabefeld (11) einer vorgegebenen Textnachricht eine veränderbare Länge besitzt.

19. Mobile Station nach einem der vorhergehenden Ansprüche,
    **dadurch gekennzeichnet,**
    **daß** das mindestens eine beliebig veränderbare Eingabefeld (11) einer vorgegebenen Textnachricht lediglich durch eine Einfügemarke zum Einfügen von benutzerspezifischen Textzeichen mit Hilfe der Eingabemittel (4) gebildet ist.

20. Mobile Station nach einem der Ansprüche 2 bis 18,
    **dadurch gekennzeichnet,**
    **daß** das mindestens eine beliebig veränderbare Eingabefeld (11) einer vorgegebenen Textnachricht zumindest teilweise vorgegebene Textzeichen enthält.

21. Mobile Station nach einem der Ansprüche 18 bis 20
    **dadurch gekennzeichnet,**
    **daß** eine Steuereinrichtung (2) vorgesehen ist, welche die Gesamtlänge einer ausgewählten Textnachricht überwacht und das Einfügen zusätzlicher Textzeichen unterbindet, falls die Gesamtlänge der ausgewählten Textnachricht nach deren Verändern mit Hilfe der Eingabemittel (4) eine vorgegebene Maximallänge überschreitet.

22. Mobile Station nach einem der vorhergehenden Ansprüche,
    **gekennzeichnet durch**
    eine Empfangseinheit (9) zum Empfangen von Kommunikationsinformationen von einer Basisstation, welche Textinformationen umfassen, und Wiedergabemittel (3, 6) zum Wiedergeben der Textinformationen der empfangenen Kommunikationsinformationen.

**Claims**

1. Mobile station for the transmission of communication information to a base station, in which case the communication information comprises text information,
   having input means (4) for inputting text information, and
   having a transmission unit (9) for the transmission of the communication information,
   having memory means (7) for storing predetermined text information, which comprises at least one fixed text field (10),
   **characterized by**
   the stored, predetermined text information containing, depending on the text messages, information which relates to the number of user variable input fields (11), the position of the user variable input fields (11) in the corresponding text message, and/or the length of the user variable input fields (11).

2. Mobile station according to Claim 1,
   **characterized**
   **in that** the predetermined text information which is stored in the memory means (7) comprises a plurality of predetermined text messages, which each comprise a fixed text field (10) as well as at least one user input field (11), which can be changed as required by a user.

3. Mobile station according to Claim 2,
   **characterized**
   **in that** the input means (4) are intended for selection of one of the text messages as well as for changing or filling out a user variable input field (11) in the selected text message.

4. Mobile station according to Claim 3,
   **characterized**
   **in that** the transmission unit (9) can be activated via the input means (4), in which case the text information items transmitted by the transmission unit (9) comprise the selected, predetermined text message having the at least one fixed text field (10), as well as having the at least one user variable input field (11), as well as text characters which may possibly be input via the input means (4) into the at least one user variable input field (11).

5. Mobile station according to Claim 3 or 4,
**characterized by**
a display device (3) which shows the selectable, predetermined text messages and displays the at least one fixed text field (10) as well as the at least one input field (11), which can be changed as required by a user, of a text message after it has been selected.

6. Mobile station according to Claim 5,
**characterized**
**in that** the display device (3) displays an user variable input field (11), which can be changed as required by a user, of a selected, predetermined text message in a visually highlighted manner.

7. Mobile station according to one of Claims 3 to 6,
**characterized**
**in that** the input means (4) allow a change between the input fields (11), which can be changed as required by a user, of a selected, predetermined text message if the selected, predetermined text message comprises a plurality of user variable input fields (11), in order to change each of these user variable input fields (11).

8. Mobile station according to Claim 5 or 6 and Claim 7,
**characterized**
**in that** the display device (3) displays the instantaneous input position in an input field (11), which can be changed as required by a user, of a selected, predetermined text message, at which a text character can be input using the input means (4).

9. Mobile station according to one of the preceding claims,
**characterized by**
memory means (8) for storage of user-specifically produced text information which is based on the predetermined text information.

10. Mobile station according to Claim 9,
**characterized**
**in that** the memory means (7) for storage of the predetermined text information also store the user-specifically produced text information.

11. Mobile station according to Claim 9 or 10,
**characterized**
**in that** the memory means (7) for storage of the predetermined text information and/or the memory means (8) for storage of the user-specifically produced text information are interchangeable.

12. Mobile station according to one of Claims 2 to 11,
**characterized**
**in that** each user variable input field (11) in a predetermined text message is assigned a specific input field type.

13. Mobile station according to Claim 12,
**characterized**
**in that** the input field types which are provided comprise a letter input field which allows only letters to be input, a number input field which allows only numbers to be input, a date field which allows only a date to be input, and/or a time field which allows only a time to be input.

14. Mobile station according to Claim 12 or 13,
**characterized**
**in that** the input means (4) comprise a keypad whose keys have multiple functions, and
**in that** a control device (2) is provided which automatically identifies the input field type of an input field (11) which is to be edited, and blocks that keypad function which does not correspond to the identified input field type.

15. Mobile station according to one of Claims 12 to 14,
**characterized**
**in that** the stored, predetermined text information contains, depending on text messages, information relating to the input field types of the input fields (11), which can be changed as required by a user, of the individual text messages.

16. Mobile station according to one of Claims 11 to 15,
**characterized**
**in that** the actual text of the predetermined text messages is arranged in the stored, predetermined text information on the basis of the information which is dependent on the text messages.

17. Mobile station according to one of the preceding claims,
**characterized**
**in that** the input means (4) are intended for producing the predetermined text information in a user-specific manner.

18. Mobile station according to one of the preceding claims,
**characterized**
**in that** the at least one input field (11), which can be changed as required by a user, of a predetermined text message has a variable length.

19. Mobile station according to one of the preceding claims,
**characterized**
**in that** the at least one input field (11), which can be changed as required by a user, of a predetermined text message is formed merely by an insertion mark for the insertion of user-specific text characters using the input means (4).

**20.** Mobile station according to one of Claims 2 to 18, **characterized**
**in that** the at least one input field (11), which can be changed as required by a user, of a predetermined text message contains at least partially determined text characters.

**21.** Mobile station according to one of Claims 18 to 20, **characterized**
**in that** a control device (2) is provided which monitors the overall length of a selected text message and suppresses the insertion of additional text characters if the overall length of the selected text message, after it has been changed using the input means (4), exceeds a predetermined maximum length.

**22.** Mobile station according to one of the preceding claims,
**characterized by**
a receiving unit (9) for the reception from a base station of communication information which comprises text information, and
reproduction means (3, 6) for reproducing the text information in the received communication information.

**Revendications**

**1.** Station mobile pour la transmission d'informations de communication à une station de base, les informations de communication comprenant des informations de texte,
comprenant des moyens de saisie (4) pour la saisie des infommations de texte et une unité d'émission (9) pour la transmission des informations de communication,
comprenant des moyens de mémorisation (7) pour la mémorisation d'informations de texte prédéfinies, lesquels comprennent au moins un champ de texte (10) non modifiable,
**caractérisée en ce que**
les informations de texte prédéfinies mémorisées contiennent des informations dépendant de messages de texte sur le nombre des champs de saisie modifiables (11), la position des champs de saisie modifiables (11) dans le message de texte correspondant et/ou la longueur des champs de saisie modifiables (11).

**2.** Station mobile selon la revendication 1,
**caractérisée en ce que**
les informations de texte prédéfinies mémorisée dans les moyens de mémorisation (7) comprennent plusieurs messages de texte prédéfinis, lesquels sont respectivement constitués d'un champ de texte non modifiable (10) ainsi que d'au moins d'un champ de saisie (11) modifiable librement par un utilisateur.

**3.** Station mobile selon la revendication 2,
**caractérisée en ce que**
les moyens de saisie (4) sont prévus pour sélectionner l'un des messages de texte ainsi que pour modifier resp. remplir un champ de saisie modifiable (11) du message de texte sélectionné.

**4.** Station mobile selon la revendication 3,
**caractérisée en ce que**
l'unité d'émission (9) peut être activée par l'intermédiaire des moyens de saisie (4), les informations de texte transmises par l'unité d'émission (9) comprenant le message de texte prédéfini sélectionné avec au moins un champ de texte (10) non modifiable ainsi qu'avec au moins le champ de saisie (11) modifiable ainsi que, le cas échéant, des caractères de texte saisis dans au moins un champ de saisie modifiable (11) par l'intermédiaire des moyens de saisie (4).

**5.** Station mobile selon la revendication 3 ou 4,
**caractérisée par**
un dispositif d'affichage (3) qui représente les messages de texte prédéfinis pouvant être sélectionnées et au moins le champ de saisie non modifiable (10) ainsi qu'au moins un champ de saisie (11) modifiable librement d'un message de texte après la sélection de celui-ci.

**6.** Station mobile selon la revendication 5,
**caractérisée en ce que**
le dispositif d'affichage (3) représente de manière marquée optiquement un champ de saisie (11) modifiable librement d'un message de texte prédéfini sélectionné.

**7.** Station mobile selon l'une des revendications 3 à 6,
**caractérisée en ce que**
les moyens de saisie (4) permettent un changement entre les champs de saisie modifiables librement (11) d'un message de texte prédéfini sélectionné, au cas où le message de texte prédéfini sélectionné comprend plusieurs champs de saisie modifiables (11) pour modifier chacun de ces champs de saisie modifiables (11).

**8.** Station mobile selon la revendication 5 ou 6 et la revendication 7,
**caractérisée en ce que**
le dispositif d'affichage (3) affiche la position momentanée de saisie dans un champ de saisie (11) modifiable librement d'un message de texte prédéfini sélectionné, sur lequel un caractère de texte peut être entré à l'aide des moyens de saisie (4).

**9.** Station mobile selon Tune des revendications précédentes
**caractérisée par**
des moyens de mémorisation (8) pour la mémorisation d'informations de texte créées de manière spécifique à l'utilisateur, lesquelles sont basées sur les informations de texte prédéfinies.

**10.** Station mobile selon la revendication 9,
**caractérisée en ce que**
les moyens de mémorisation (7) pour la mémorisation des informations de texte prédéfinies mémorisent aussi les informations de texte créées de manière spécifique à l'utilisateur.

**11.** Station mobile selon la revendication 9 ou 10,
**caractérisée en ce que**
les moyens de mémorisation (7) pour la mémorisation des informations prédéfinies et/ou les moyens de mémorisation (8) pour la mémorisation des informations de texte créées de manière spécifique à l'utilisateur sont interchangeables.

**12.** Station mobile selon l'une des revendication 2 à 11,
**caractérisée en ce que**
un certain type de champ de saisie est attribué à chaque champ de saisie modifiable (11) d'un message de texte prédéfini.

**13.** Station mobile selon la revendication 12,
**caractérisée en ce que**
un champ de saisie de lettres qui permet uniquement la saisie de lettres, un champ de saisie de chiffre qui permet uniquement la saisie de chiffres, un champ de saisie de date qui permet uniquement la saisie dune date, et/ou un champ d'heure qui permet uniquement la saisie dune heure est/sont prévu (s) comme types de champ de saisie.

**14.** Station mobile selon la revendication 12 ou 13,
**caractérisé en ce que**
les moyens de saisie (4) comprennent un clavier dont les touches sont affectées plusieurs fois, et **en ce qu'**un dispositif de commande (2) est prévu, lequel identifie automatiquement le type de champ de saisie d'un champ de saisie à modifier (11) et bloque l'affectation du clavier qui ne correspond pas au type de champ de saisie identifié.

**15.** Station mobile selon l'une des revendications 12 à 14,
**caractérisée en ce que**
les informations mémorisées prédéfinies contiennent des informations dépendantes des messages de texte sur les types de champ de saisie des champs de saisie modifiables librement (11) des messages de texte individuels.

**16.** Station mobile selon l'une des revendications 11 à 15,
**caractérisée en ce que**
le texte à proprement dit des messages de texte prédéfinis est disposé dans les informations de texte prédéfinies mémorisées après les informations dépendantes des messages de texte.

**17.** Station mobile selon l'une des revendications précédentes,
**caractérisée en ce que**
les moyens de saisie (4) sont prévus pour la création spécifique à l'utilisateur des informations de texte prédéfinies.

**18.** Station mobile selon l'une des revendications précédentes,
**caractérisée en ce que**
l'au moins le champ de saisie (11) modifiable librement d'un message de texte prédéfini possède une longueur modifiable.

**19.** Station mobile selon l'une des revendications précédentes,
**caractérisée en ce que**
l'au moins un champ de saisie (11) modifiable librement d'un message de texte prédéfini est formé seulement par une marque d'insertion pour l'insertion de caractères de texte spécifiques à l'utilisateur à l'aide des moyens de saisie (4).

**20.** Station mobile selon l'une des revendications 2 à 18,
**caractérisée en ce que**
l'au moins un champ de saisie (11) modifiable librement d'un message de texte prédéfini contient au moins en partie des caractères de texte prédéfinis.

**21.** Station mobile selon l'une des revendications 18 à 20,
**caractrisée en ce que**
un dispositif de commande (2) est prévu, lequel contrôle la longueur totale d'un message de texte sélectionné et empêche l'insertion de caractères de texte supplémentaires au cas où la longueur totale du message de texte sélectionné dépasse une longueur maximale prédéfinie apres leur modification à l'aide des moyens de saisie (4).

**22.** Station mobile selon l'une des revendications précédentes,
**caractérisée par**
une unité de réception (9) pour la réception d'informations de communication par une station de base, lesquelles comprennent des informations de texte, et

des moyens de restitution (3, 6) pour la restitution des informations de texte des informations de communication reçues.

## FIG 1

1

Anzeige — 3

5

2

4

Mikrofon → Steuereinheit ↔ Tastatur

Laut-sprecher ←

6

7 — Speicher 1     Speicher 2 — 8

Luftschnittstelle — 9

FIG 2

# FIG 3

19

Nachricht wird übermittelt — 3g

22

Wiederholen

Abbruch

23

3h
Nachricht konnte nicht übermittelt werden

Nachricht wurde erfolgreich übermittelt — 3j

14    15

3i — Nachricht speichern?

JA    NEIN

24    25

Nachricht editieren

Neue Nachricht

Einstellungen

3k

OK    Abbruch

13    23